Europäisches Patentamt

European Patent Office

Office européen des brevets

(11) Numéro de publication: **0 230 172**
**B1**

## FASCICULE DE BREVET EUROPEEN

(45) Date de publication du fascicule du brevet:
11.04.90

(51) Int. Cl.⁴: **G21C 19/10**

(21) Numéro de dépôt: 86402649.7

(22) Date de dépôt: 28.11.86

(54) **Dispositif de préhension d'un faisceau de crayons d'un assemblage de combustible nucléaire.**

(30) Priorité: 02.12.85 FR 8517779

(43) Date de publication de la demande:
29.07.87 Bulletin 87/31

(45) Mention de la délivrance du brevet:
11.04.90 Bulletin 90/15

(84) Etats contractants désignés:
BE CH DE ES GB IT LI NL SE

(56) Documents cités:
EP-A- 0 066 695
EP-A- 0 146 808
DE-A- 1 502 788
FR-A- 1 363 706
FR-A- 2 533 065

(73) Titulaire: COMPAGNIE GENERALE DES MATIERES
NUCLEAIRES (COGEMA), 2, rue Paul Dautier B.P. 4,
F-78141 Velizy-Villacoublay(FR)

(72) Inventeur: Tsitsichvili, Jean, 126 Avenue de Verdun,
F-92130 Issy-les-Moulineaux(FR)

(74) Mandataire: Mongrédien, André et al, c/o
BREVATOME 25, rue de Ponthieu, F-75008 Paris(FR)

## Description

L'invention concerne un dispositif de préhension d'un faisceau de crayons disposés selon un réseau à pas carré dans un assemblage de combustible nucléaire.

Dans les réacteurs nucléaires, notamment du type à eau pressurisée, la matière fissile est constituée par des pastilles frittées d'oxyde d'uranium $UO_2$. Ces pastilles sont placées en piles dans des gaines métalliques, pour former des crayons de combustible. Les crayons sont eux-mêmes disposés en faisceaux selon un réseau à pas carré dans des assemblages de combustible nucléaire, qui sont ensuite juxtaposés pour former le coeur du réacteur.

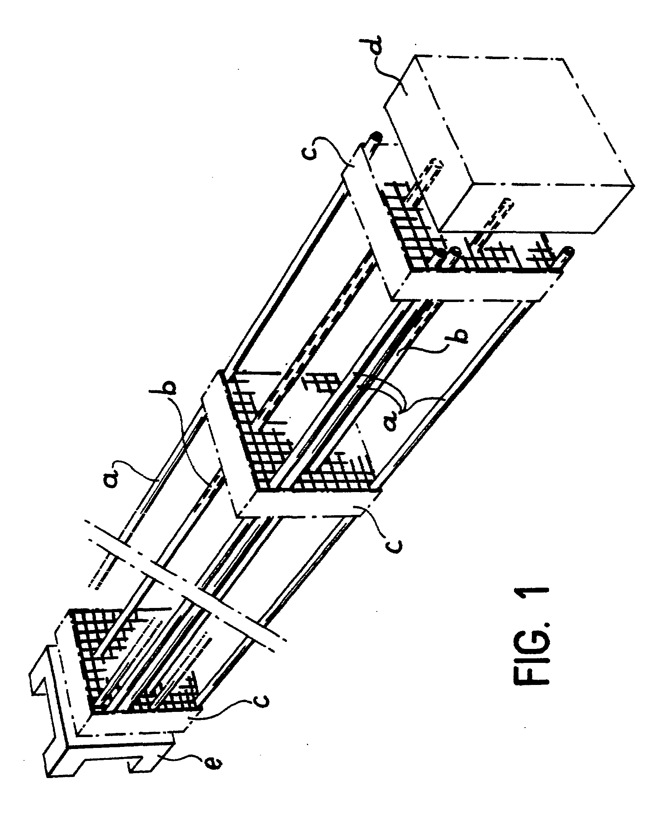

La figure 1 est une vue en perspective représentant schématiquement un assemblage de combustible nucléaire. Celui-ci comprend, en plus du faisceau de crayons a, un certain nombre de tubes guides b qui occupent la place de certains crayons a dans le réseau à pas carré. Pour clarifier la figure, seuls un crayon et un tube guide ont été représentés. La plupart des tubes guides b servent à guider de façon coulissante les crayons absorbants des grappes de contrôle (non représentées).

Le positionnement relatif entre les crayons et les tubes est assuré par des grilles d'espacement c, généralement au nombre de huit et dont trois seulement sont représentées sur la figure 1. Ces grilles constituent l'ossature de l'assemblage.

L'assemblage comprend de plus deux pièces d'extrémité constituées par un embout supérieur d et par un embout inférieur e. Ces embouts servant respectivement à la manutention de l'assemblage et à la fixation de celui-ci dans le coeur du réacteur. Ils sont fixés aux extrémités des tubes guides b.

Lorsqu'un tel assemblage a été irradié dans le coeur d'un réacteur nucléaire, il doit être démantelé afin que le combustible soit retraité.

Une première étape du démantèlement des assemblages consiste à tronçonner les tubes guides b à un niveau inférieur à celui de l'extrémité supérieure des crayons a, afin de libérer l'accès à cette extrémité des crayons, après enlèvement de l'embout supérieur d, de la grille supérieure et des parties des tubes guides qui y sont attachées.

Au cours d'une deuxième étape, les crayons a sont saisis par leurs extrémités afin d'être extraits de la partie restante de l'ossature de l'assemblage. L'invention concerne précisément un dispositif de préhension destiné à effectuer cette opération.

Lorsque les crayons ont été extraits, le démantèlement proprement dit est terminé et les crayons sont généralement stockés en piscine afin de permettre une décroissance de leur activité. Lorsque cette décroissance est jugée suffisante, les crayons sont tronçonnés et le combustible qu'ils contiennent est dissous avant d'être retraité.

Dans l'état actuel de la technique, il n'existe pas de dispositif de préhension permettant d'extraire en une seule opération les crayons du reste de l'ossature de l'assemblage au cours de la deuxième étape du démantèlement.

De plus, lorsqu'ils assurent la préhension simultanée de plusieurs crayons, les dispositifs de préhension existants sont constitués par la juxtaposition de plusieurs organes de préhension indépendants par exemple du type à billes autobloquantes, assurant chacun la préhension d'un seul crayon.

Ces dispositifs de préhension existants conduisent donc à un temps de manutention relativement long résultant de la multiplicité d'opérations nécessaires à l'extraction de tous les crayons d'un même assemblage. De plus, il existe un risque de cassure des crayons qui peuvent rester bloqués dans l'ossature de l'assemblage par suite d'une déformation consécutive à leur irradiation. En effet, l'effort de serrage exercé par les billes de chaque organe de préhension indépendant sur le crayon qu'il saisit n'est pas limité.

La présente invention a précisément pour objet un dispositif de préhension conçu dans son ensemble de façon à pouvoir saisir simultanément tous les crayons du faisceau contenu dans un assemblage de combustible nucléaire tel que celui qui est représenté sur la figure 1, de préférence en appliquant à chacun des crayons un effort limité. Elle prend en compte l'allongement différentiel des crayons d'un même assemblage, après irradiation.

A cet effet, il est proposé un dispositif de préhension d'un faisceau de crayons disposés en rangées parallèles de n crayons au plus, selon un réseau à pas carré dans un assemblage de combustible nucléaire, ce dispositif étant caractérisé en ce qu'il comprend :

- un corps comportant une partie centrale évidée selon un rectangle dont les dimensions sont au moins égales aux dimensions extérieures présentées en section par le faisceau, des cloisons parallèles divisant cette partie centrale en p couloirs pouvant recevoir chacun les extrémités des crayons d'au plus deux rangées de crayons voisines ;

- p séries de (n+1) organes mobiles logées dans chacun des p couloirs de telle sorte que l'extrémité de chaque crayon peut être placée entre deux organes mobiles voisins d'un même couloir ;

- des moyens de serrage et des moyens d'actionnement logés dans le corps d'un côté au moins de ladite partie centrale, aptes à appliquer sur les extrémités des crayons et les organes mobiles contenus dans chacun des couloirs un effort tendant à serrer chaque crayon entre deux organes mobiles voisins d'un même couloir.

L'originalité essentielle de ce dispositif réside dans le mode de préhension, chaque rangée de crayons étant soumise à un effort de serrage appliqué aux extrémités de cette rangée et transmis d'un crayon à l'autre par des organes mobiles venant s'interposer entre chacun des crayons. De cette manière, il est possible de saisir simultanément tous les crayons de l'assemblage.

Pour tenir compte du fait qu'en pratique le faisceau de crayons comprend généralement moins de n crayons dans certaines des rangées, puisque les emplacements occupés précédemment par les tubes guides restent vides, le dispositif comprend en outre, de préférence, des rouleaux de diamètre extérieur sensiblement égal à celui des crayons, ces rouleaux étant placés entre certains des organes mobiles afin de combler les vides du réseau.

Selon un mode de réalisation préféré de l'invention dans lequel chacun des couloirs peut recevoir les extrémités des crayons de deux rangées de crayons voisines, les organes mobiles ont la forme de croisillons et comprennent une branche placée entre les deux rangées de crayons voisines d'un même couloir et dont une extrémité peut venir en appui sur une extrémité de ladite branche de l'organe mobile voisin, afin de limiter l'effort appliqué sur les crayons lors de la mise en œuvre des moyens de serrage.

Afin de faciliter l'automatisation de la mise en œuvre du dispositif de préhension, ce dispositif peut également comprendre un dispositif éjecteur comportant une plaque mobile par rapport au corps selon une direction orthogonale audit rectangle formé par la partie centrale évidée, cette plaque portant un faisceau de tiges disposées selon un réseau identique à celui des crayons et aptes à prendre la place de ces derniers, pour les éjecter du dispositif de préhension après relâchement des moyens de serrage. Des moyens élastiques peuvent alors solliciter le dispositif éjecteur vers une position dans laquelle les tiges sont placées entre les organes mobiles à la place des crayons.

Selon un mode de réalisation préféré de l'invention, les moyens de serrage comprennent deux séries de p poussoirs logés dans le corps, sur deux côtés opposés de la partie centrale, un poussoir de chaque série pénétrant dans chacun des couloirs, aux extrémités opposées de celui-ci, et des moyens d'actionnement aptes à déplacer les poussoirs vers ladite partie centrale pour exercer ledit effort sur les extrémités des crayons et les organes mobiles.

Chaque poussoir peut alors être réalisé en deux parties et comprendre un dispositif élastique par lequel l'effort exercé par les moyens d'actionnement est transmis entre ces deux parties.

Dans ce mode de réalisation préféré de l'invention, les moyens d'actionnement comprennent deux dispositifs à coins agissant sur chaque série de poussoirs, ces dispositifs à coins pouvant occuper une position stable d'ouverture et une position stable de fermeture. Grâce à cette caractéristique, il est possible de commander l'ouverture et la fermeture du dispositif de préhension à l'aide de deux jeux de vérins à poste fixe situés respectivement au niveau d'un poste de préhension et d'un poste de relâchement des crayons. Le dispositif de préhension proprement dit, au moyen duquel le faisceau de crayons est transporté d'un poste à l'autre, s'en trouve simplifié.

En pratique, chaque dispositif à coins comprend de préférence une première pièce mobile dans le corps selon une direction de coulissement en rapprochement et en éloignement de la partie centrale, cette première pièce étant en appui sur l'une des séries de poussoirs, et une deuxième pièce mobile dans le corps selon une direction orthogonale à la direction de coulissement de la première pièce, ces deux pièces coopérant entre elles par un système de rampes terminées par des méplats définissant lesdites positions stables d'ouverture et de fermeture.

On décrira maintenant, à titre d'exemple non limitatif, un mode de réalisation préféré de l'invention en se référant aux dessins annexés dans lesquels :

- la figure 1, déjà décrite, est une vue en perspective représentant de façon schématique et fragmentaire un assemblage de combustible nucléaire d'un réacteur nucléaire à eau sous pression ;
- la figure 2a est une vue de côté illustrant de façon très schématique la première étape du démantèlement de cet assemblage consistant à séparer du reste de l'assemblage l'embout supérieur et les parties des tubes guides qui lui sont fixés ;
- la figure 2b est une vue comparable à la figure 2a illustrant de façon très schématique la deuxième étape du démantèlement de l'assemblage de la figure 1 consistant, à l'aide d'un dispositif de préhension conforme à l'invention, à extraire le faisceau de crayons du reste de l'assemblage ;
- la figure 3 est une vue en coupe schématique, transversalement au faisceau de crayons selon la ligne III-III de la figure 4, représentant le dispositif de préhension conforme à l'invention, ce dispositif étant en position ouverte sur la partie gauche de la figure 3 et en position fermée sur la partie droite de cette figure ;
- la figure 4 est une vue en coupe longitudinale selon la ligne IV-IV de la figure 3 ;
- la figure 5 est une vue à plus grande échelle comparable à la figure 4 et faisant apparaître les différences de longueurs des crayons à saisir ; et
- la figure 6 est une vue à plus grande échelle comparable à la figure 3 représentant plus en détail la structure des organes mobiles en forme de croisillons entre lesquels sont serrées les extrémités des crayons.

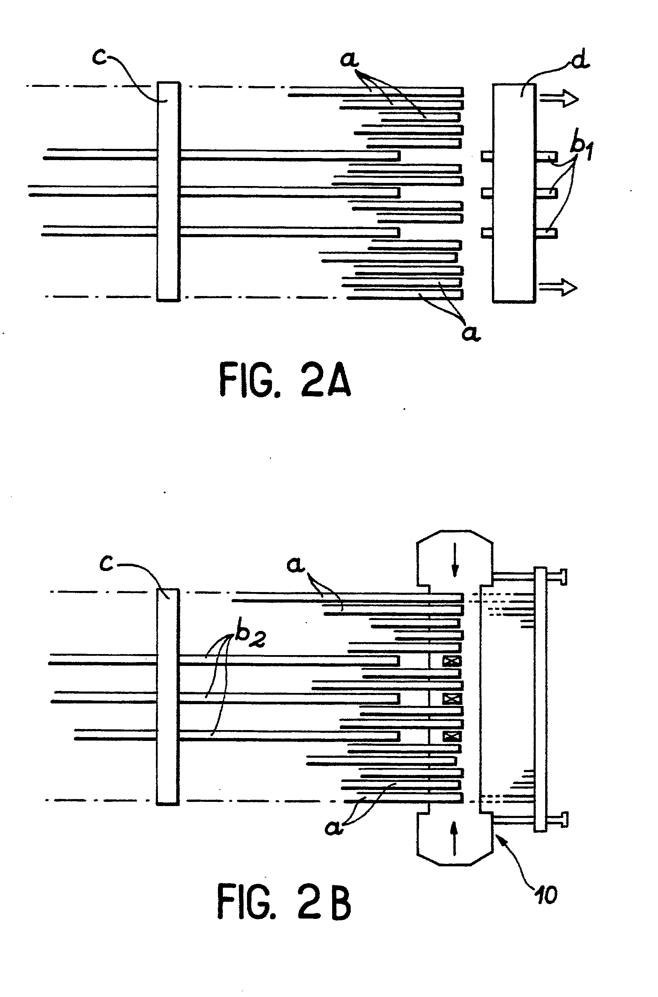

En se reportant à la figure 2a, on voit que la première étape du démantèlement d'un assemblage de combustible nucléaire tel que celui qui est représenté schématiquement sur la figure 1 consiste à séparer du reste de l'assemblage l'embout supérieur $\underline{d}$ ainsi que les tronçons $b_1$ des tubes guides qui restent attachés sur cet élément.

Cette opération est réalisée par tronçonnage interne des tubes guides, à une certaine distance en dessous de l'extrémité supérieure des crayons $\underline{a}$, l'assemblage étant considéré verticalement dans la position qu'il occupe dans le coeur du réacteur. Généralement, la grille supérieure de l'assemblage est également démontée lors de cette opération, car sa présence risquerait ultérieurement d'empêcher une mise en oeuvre correcte du dispositif de préhension selon l'invention.

Il est rappelé que cette première opération de démantèlement est classique et ne fait pas partie de l'invention. Elle ne sera donc pas décrite ici plus en détail.

La deuxième étape du démantèlement consiste à extraire le faisceau de crayons $\underline{a}$ du reste de l'ossature de l'assemblage constitué par l'embout inférieur $\underline{e}$ (figure 1), les grilles restantes $\underline{c}$ et les parties restantes $b_2$ des tubes guides.

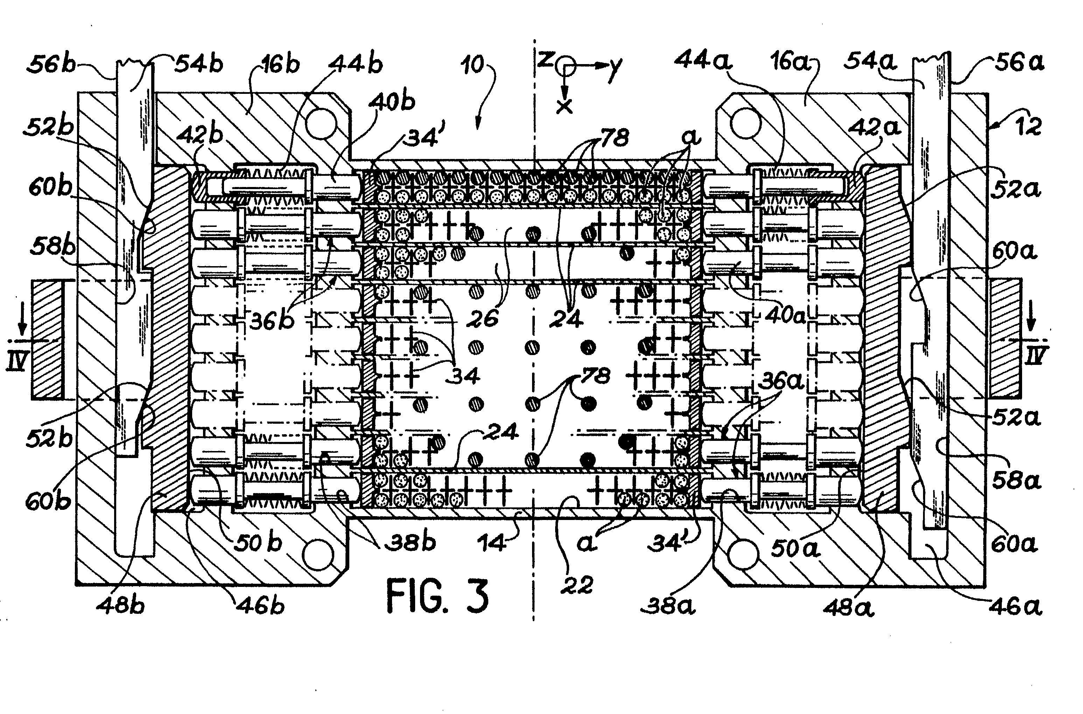

Conformément à l'invention, cette deuxième étape est réalisée en une seule opération illustrée schématiquement sur la figure 2b, grâce à un dispositif de préhension 10 qui va maintenant être décrit en détail en se référant aux figures 3 à 6.

Pour faciliter la compréhension, on affecte au dispositif de préhension 10 un repère orthonormé XYZ, dans lequel les axes X et Y s'étendent selon les deux directions définies par le réseau carré formé par les crayons à saisir, l'axe Z étant parallèle aux axes des crayons, lorsqu'un faisceau de crayons est saisi par le dispositif 10.

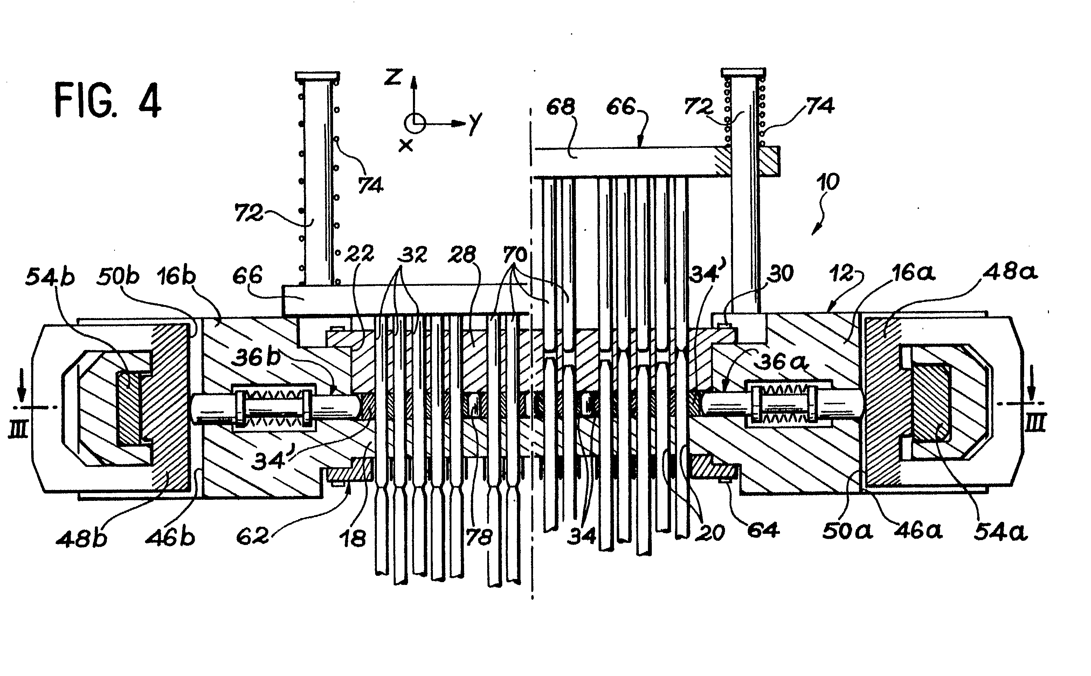

Sur les figures 3 et 4, on voit que le dispositif de préhension selon l'invention comprend un corps 12 constitué d'une partie centrale 14 et de deux parties latérales identiques 16a et 16b disposées de part et d'autre de la partie centrale 14.

On voit notamment sur la figure 4 que la partie centrale 14 comprend une plaque plane 18, de forme rectangulaire ou carrée, dont les dimensions sont légèrement supérieures à l'encombrement que présente en section le faisceau de crayons a d'un assemblage. Cette plaque est parallèle au plan XY et ses côtés sont orientés selon ces directions X et Y.

La plaque 18 est traversée par des perforations cylindriques 20 dont les axes sont parallèles à la direction Z. Les perforations 20 sont disposées selon un réseau identique au réseau à pas carré formé par le faisceau de crayons a à saisir. A titre d'exemple pour un assemblage classique de section carré, ce réseau comprend 17 rangées selon la direction Y d'au plus 17 crayons chacune. Cependant, aucune perforation n'est prévue aux emplacements occupés précédemment par les tubes guides dans le faisceau de crayons. Le diamètre des perforations 20 est légèrement supérieur au diamètre extérieur des crayons à saisir.

Sur la face de la plaque 18 opposée à la face par laquelle les crayons a pénètrent dans les perforations 20 (c'est-à-dire sur la face supérieure de la plaque 18 en considérant la figure 4), ces perforations débouchent dans un évidement rectangulaire 22. La section de cet évidement dans le plan XY est identique à la section de la plaque 18.

Comme le montre plus précisément la figure 3, dans sa partie la plus proche de la plaque perforée 18, l'évidement 22 est divisé en couloirs 26 par des cloisons planes et parallèles 24 qui s'étendent parallèlement au plan YZ entre les parties latérales 16a et 16b du corps 12. Les couloirs 26 sont tous de même dimension. De façon plus précise, les cloisons 24 sont disposées de telle sorte que deux rangées voisines de trous 20 (considérées selon la direction Y) débouchent dans chacun des couloirs 26. Dans l'exemple d'un assemblage de section carré comprenant 17 rangées d'au plus 17 crayons, on prévoit neuf couloirs 26, comme l'illustre la figure 3, une seule rangée de crayons étant reçue dans l'un des couloirs latéraux (celui du haut sur la figure 3).

Comme l'illustre la figure 4, l'évidement 22 est obturé du côté opposé à la plaque 18 par une pièce 28 fixée sur la partie centrale 14 du corps 12, par exemple par des vis 30. Cette pièce 28 est également traversée par des perforations cylindriques 32 disposées selon un réseau identique à celui formé par les perforations 20, les perforations 20 et 32 étant alignées deux à deux. Les perforations 32 présentent également un diamètre légèrement supérieur au diamètre extérieur des crayons a à saisir.

Comme l'illustre plus précisément la figure 3, une série d'organes mobiles en forme de croisillons 34 est placée dans chacun des couloirs 26 délimités par les cloisons 24. Ces organes 34 seront décrits plus en détail ultérieurement. On notera simplement ici qu'ils sont placés dans chaque couloir de telle sorte que deux trous 20 appartenant à deux rangées voisines selon la direction Y (ainsi que les trous 32 en vis-à-vis) débouchent entre deux croisillons voisins du même couloir. Les organes mobiles 34' placés aux extrémités de chacun des couloirs 26 ont une forme légèrement différente. Plus précisément, leur face tournée vers l'extrémité du couloir est plane.

Le dispositif de préhension selon l'invention comprend de plus des moyens de serrage logés dans les parties latérales 16a et 16b du corps 12.

Ces moyens de serrage comprennent tout d'abord, dans chacune des parties latérales 16a et 16b, une série de poussoirs 36a, 36b respectivement. Dans l'exemple considéré, chacune des séries de poussoirs est constituée de neuf poussoirs identiques. Les poussoirs 36a et 36b, de configuration générale cylindrique, sont alignés deux à deux parallèlement à la direction Y. En outre, les axes de tous les poussoirs 36a, 36b sont tous placés dans un même plan parallèle au plan XY. Chaque poussoir 36a, 36b est reçu dans un alésage 38a, 38b formé dans la partie 16a, 16b respectivement du corps 12 et débouchant dans l'évidement 22. De façon plus précise, un alésage 38a, 38b débouche à chacune des extrémités des couloirs 26 délimités par les cloisons 24.

Chacun des poussoirs 36a, 36b comprend une partie avant 40a, 40b dont l'extrémité bombée vient en appui sur la face arrière plane de l'organe mobile 34' correspondant.

Chacun des poussoirs 36a, 36b comprend de plus une partie arrière 42a, 42b apte à coulisser selon la direction Y par rapport à la partie avant 40a, 40b. Les parties avant 40a, 40b et arrière 42a, 42b de chacun des poussoirs sont sollicitées en éloignement l'une de l'autre par un empilement de rondelles élastiques 44a, 44b tendant à accroître la longueur de chacun des poussoirs 36a, 36b.

La partie arrière 42a, 42b des poussoirs de chaque série de poussoirs 36a, 36b débouche dans un évidement 46a, 46b formé à l'intérieur de la partie correspondante 16a, 16b du corps 12.

Chacune des séries de poussoirs 36a, 36b coopère avec des moyens d'actionnement logés respectivement dans les évidements 46a, 46b. Ces moyens d'actionnement sont constitués chacun par un dispositif à coins formé de deux pièces 48a, 54a et 48b, 54b, respectivement.

Les pièces 48a, 48b sont logées de façon coulissante selon la direction Y dans chacun des évidements 46a, 46b. Chacune des pièces 48a, 48b présente une face avant plane 50a, 50b, parallèle au plan XZ et sur laquelle vient en appui l'extrémité bombée de chacune des parties arrières 42a, 42b des poussoirs correspondants.

Le guidage des pièces 48a et 48b dans les évidements 46a et 46b est obtenu par le glissement des faces d'extrémités de ces pièces selon la direction X sur des surfaces planes formées dans les évidements, parallèlement au plan YZ.

De plus, comme on le voit mieux sur la figure 4, chacune des pièces 48a, 48b comprend dans sa partie centrale selon la direction X un prolongement présentant une section en forme de O. Cette configuration permet d'assurer un guidage satisfaisant de ces pièces lors de leur déplacement. En effet, des faces d'extrémité des parties 16a et 16b espacées selon la direction Z sont en contact glissant avec des surfaces planes parallèles au plan XY formées à l'intérieur des prolongements en forme de 0 des pièces 48a, 48b.

Comme on le voit sur la figure 3, chacune des pièces 48a, 48b présente sur sa face arrière deux rampes 52a, 52b qui se terminent par des parties planes parallèles au plan XZ.

Le déplacement de chacune des pièces 48a, 48b selon la direction Y est commandé par une autre pièce 54a, 54b interposée entre la face arrière plane 56a, 56b de l'évidement 46a, 46b, parallèle au plan XZ, et la face arrière de la pièce 48a, 48b correspondante. Chacune des pièces 54a, 54b se prolonge à l'extérieur du corps 12, selon la direction X, de façon à pouvoir être déplacée selon cette direction dans l'un ou l'autre sens, par exemple sous l'action d'un vérin (non représenté).

Chaque pièce 54a présente une face arrière plane 58a, 58b, en appui coulissant sur la face arrière 56a, 56b de l'évidement correspondant.

La face avant de chacune des pièces 54a, 54b est pratiquement complémentaire de la face arrière de chacune des pièces 48a, 48b. De façon plus précise, chaque pièce 54a, 54b comporte également deux rampes 60a, 60b espacées de la même distance que les rampes 52a, 52b et débouchant à leurs extrémités sur des parties planes et parallèles au plan XZ.

Comme le représente la partie gauche de la figure 3, lorsque les pièces 54a, 54b occupent leur position de desserrage dans laquelle elles sont sorties au maximum du corps 12 du dispositif selon la direction X, les rampes 60a, 60b sont en face des rampes 52a, 52b. Cette position est stable car les parties planes formées au pied des rampes 52a, 52b des pièces 48a, 48b sont en appui sur les parties planes formées au sommet des rampes 60a, 60b des pièces 54a, 54b. Les pièces 48a, 48b sont alors escamotées vers l'arrière à l'intérieur des évidements 46a, 46b. Sous l'action des rondelles élastiques 44a, 44b, la partie arrière 42a, 42b de chacun des poussoirs est également sollicitée vers l'arrière. La compression des rondelles élastiques est ainsi pratiquement supprimée, de sorte qu'aucun effort de serrage n'est exercé selon la direction Y par les parties avant 40a, 40b des poussoirs sur les organes d'extrémité 34'.

Au contraire, comme l'illustre la partie droite de la figure 3, lorsque les pièces 54a, 54b sont poussées au maximum à l'intérieur des évidements 46a, 46b selon la direction X, ces pièces repoussent les pièces 48a, 48b vers l'avant par effet de coins, dû à la coopération des rampes 52a, 52b et 60a, 60b. On parvient ainsi à une position stable de serrage dans laquelle les parties planes formées au sommet des rampes 52a, 52b des pièces 48a, 48b sont en appui sur les parties planes formées au sommet des rampes 60a, 60b des pièces 54a, 54b.

Dans cette position, les parties arrière 42a, 42b des poussoirs sont également repoussées au maximum vers l'avant selon la direction Y, ce qui a pour effet de comprimer les rondelles élastiques 44a, 44b. En raison de cette compression, un effort de serrage est appliqué par les parties avant 40a, 40b des poussoirs sur les organes mobiles d'extrémité 34'.

Comme l'illustre en particulier la figure 4, le dispositif de préhension comprend de plus une grille 62 assurant un positionnement préalable des extrémités des crayons a avant que ceux-ci ne pénètrent dans le dispositif. Cette grille 62 est fixée sur la partie centrale 14 du corps 12 du côté de la plaque 18 opposé à l'évidement 22. Cette grille 26 comprend un cadre par lequel elle est fixée sur le corps 12, par exemple au moyen de vis 64, et deux séries de tôles minces parallèles disposées régulièrement selon les directions X et Y, de façon à délimiter entre elles des alvéoles de section carrée. Les dimensions de ces alvéoles sont telles que chacun des trous 20 débouche dans l'un des alvéoles.

Si les extrémités de certains des crayons à saisir sont légèrement décalées par rapport au réseau qu'ils formaient lorsque l'assemblage était neuf, la plaque 62 permet de recentrer ces extrémités afin de faciliter leur pénétration dans les trous 20.

Le dispositif de préhension selon l'invention comprend également un dispositif éjecteur 66 dont la principale fonction est de permettre l'éjection des crayons a hors du dispositif après que ces crayons aient été transportés et que l'effort de serrage ait été relâché.

Comme le montre la figure 4, ce dispositif éjecteur 66 comprend principalement une plaque plane 68, parallèle au plan XY et un faisceau de tiges 70. La plaque 68, est placée à l'extérieur du corps 12, en face de la partie centrale 14 de ce dernier et, plus précisément, du côté de la pièce 28 obturant l'évidement 22.

De préférence, la plaque 68, généralement de forme carrée, est reçue de façon coulissante sur des colonnes 72 qui font saillie sur la face correspondante du corps 12, parallèlement à la direction Z. Les colonnes 72 traversent la plaque 68 à proximité de chacun de ses angles. Un ressort 74 est comprimé entre la plaque 68 et un épaulement formé à l'extrémité de chaque colonne 72, de façon à solliciter la plaque 68 vers la plaque 28.

Les tiges 70 sont fixées sur la face de la plaque 68 orientée vers la plaque 28 selon un réseau identique au réseau formé par les perforations 20 et 32. De plus, ces tiges 70 présentent une section circulaire uniforme dont le diamètre est pratiquement identique à celui des crayons à saisir. L'axe de chacune des tiges étant confondu avec l'axe de l'un des couples de perforations 20 et 32, l'action des ressorts 74 a pour effet de faire pénètrer ces tiges 70 dans chacun des trous 32, puis entre les organes mobiles 34 et enfin dans chacune des perforations 20, comme l'illustre la partie gauche de la figure 4.

Lorsqu'on souhaite venir saisir à l'aide du dispositif décrit les extrémités d'un faisceau de crayons a afin de l'extraire d'un assemblage de combustible nucléaire, on introduit tout d'abord les extrémités des crayons dans les perforations 20, cette opération étant facilitée comme on l'a vu par la présence de la grille 62. En général, cette opération est effectuée en maintenant fixement l'assemblage contenant les crayons et en déplaçant progressivement le dispositif de préhension 10 de façon à introduire les extrémités des crayons dans les perforations 20, puis entre les organes 34 et enfin dans les perforations 32, en repoussant le dispositif éjecteur 66 de sorte que seules les extrémités des tiges 70 restent introduites dans les perforations 32. Cette situation est représentée sur la partie droite de la figure 4.

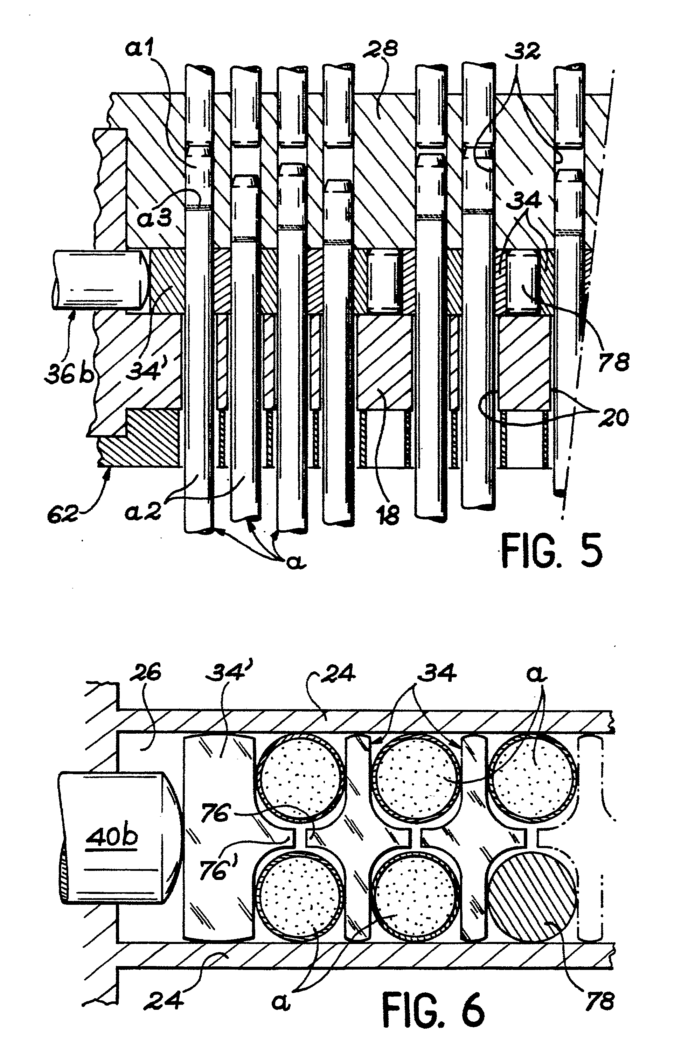

Comme l'illustre plus précisément la figure 5, l'introduction des extrémités des crayons a à l'intérieur du dispositif de préhension est faite de telle manière que l'embout supérieur $a_1$ de chacun des crayons pénètre en totalité dans la perforation 32 formée dans la pièce 28. De cette manière, la préhension proprement dite est faite sur la gaine $a_2$, en dessous du bourrelet de soudure $a_3$ séparant habituellement celle-ci de l'embout supérieur. Cette précaution permet de garantir la qualité de la préhension sur chacun des crayons, malgré le décalage selon Z qui existe généralement entre les extrémités des crayons et qui est représenté sur la figure 5. Le décalage est consécutif à l'allongement différentiel des crayons d'un même assemblage après irradiation.

Dans cette position, une partie de chacun des crayons à saisir traverse les couloirs 26 délimités par les cloisons 24. Comme l'illustre plus précisément la figure 6, on trouve ainsi, en partant de l'extrémité de chacun des couloirs, la partie avant arrondie 40a, 40b du poussoir correspondant, l'organe mobile d'extrémité 34', deux crayons a disposés côte à côte, un organe mobile 34, deux autres crayons a, etc...

De façon plus précise, l'organe mobile d'extrémité 34' présente une face arrière plane sur laquelle prend appui l'extrémité bombée de la partie 40b du poussoir. Sur sa face avant, l'organe 34' comporte deux surfaces planes aptes à venir en appui sur chacun des crayons a et entre lesquels fait saillie une branche intermédiaire 76'.

Chacun des organes mobiles 34 présente quant à lui la forme d'une croix dont une branche, disposée transversalement par rapport au couloir correspondant, sert d'appui par ses faces opposées aux quatre crayons adjacents. l'autre branche 76 de la croix formée par chacun des organes 34 est constituée par deux parties faisant saillie de part et d'autre de la première branche entre les crayons a adjacents.

Les extrémités des branches 76 et 76' sont planes et normalement espacées par un jeu j. Lors du serrage, si un écrasement des gaines des crayons a conduit à une déformation de ces gaines correspondant au jeu j, les branches 76 et 76' viennent en appui l'une contre l'autre et empêchent tout accroîssement de l'effort appliqué aux crayons. Les branches 76 et 76' permettent ainsi de limiter l'effort de serrage appliqué individuellement sur chacun des crayons.

On a vu précédemment que les espaces occupés initialement par les tubes guides dans l'assemblage constituent des vides dans le faisceau de crayons a à saisir. De plus, comme l'illustre notamment la figure 3, l'assemblage peut comprendre un nombre impair de rangées de crayons, de sorte que l'un des couloirs latéraux ne contient qu'une rangée de crayons.

Afin que l'efficacité du serrage ne soit pas perturbé par ces vides, on prévoit alors de placer aux endroits qui leur correspondent dans les couloirs 26, des rouleaux 78 dont l'axe est orienté selon l'axe Z. La longueur de ces rouleaux est légèrement inférieure à la hauteur du couloir correspondant et leur diamètre est pratiquement identique au diamètre des crayons. De cette manière on complète le réseau et l'efficacité du serrage est préservée.

Comme on l'a indiqué précédemment, le serrage proprement dit est effectué en poussant les pièces 54a, 54b vers l'intérieur des évidements 46a, 46b par exemple au moyen de vérins. Par la coopération des rampes 52a, 52b et 60a, 60b, les pièces 48a, 48b son repoussées comme l'illustrent les moitiés droites des figures 3 et 4, pour venir dans une position stable de serrage où ces pièces se trouvent calées contre les parties planes des pièces 54a, 54b. Dans cette position stable, un effort de serrage est appliqué dans chacun des couloirs 26 aux pièces d'extrémité 34' par l'intermédiaire des poussoirs 36a, 36b et des rondelles élastiques 44a, 44b portées par ces poussoirs.

Dans chaque couloir, on réalise ainsi le serrage de deux rangées de crayons, chaque crayon étant pincé entre deux organes mobiles 34 voisins. De plus, si un écrasement trop important de la gaine de certains des crayons se produit, cet écrasement est limité par la venue en butée des extrémités des branches 76 des organes mobiles 34 entre lesquels ces crayons sont serrés.

La préhension des crayons étant ainsi réalisée, ceux-ci peuvent être transportés à l'aide du dispositif 10 jusqu'à un poste de relâchement des crayons, où se trouve à poste fixe un autre jeu de vérins d'actionnement des pièces 54a et 54b. Grâce à ces vérins, on ramène les pièces 54a et 54b dans la position représentée sur la partie gauche de la figure 3, pour relâcher l'effort de serrage appliqué sur les extrémités des crayons. Sous l'action des ressorts 74, on éjecte les crayons hors du dispositif en introduisant les tiges 70 dans les perforations 32 et 20, comme l'illustre la partie gauche de la figure 4. En variante, les ressorts 74 peuvent être supprimés. L'éjection des crayons a hors du dispositif 10 est alors obtenue par la venue en appui de la plaque 68 contre une butée fixe située au poste de relâchement des crayons.

Bien entendu, l'invention n'est pas limitée au mode de réalisation qui vient d'être décrit à titre d'exemple, mais en couvre toutes les variantes.

En premier lieu, on remarquera que les cloisons 24 pourraient être deux fois plus nombreuses, les couloirs 26 délimités entre ces cloisons recevant alors chacun une seule rangée de crayons a. Par ailleurs, le remplissage des vides du faisceau par des rouleaux 78 peut être évité en utilisant au niveau de ces vides des pièces 34 de formes différentes.

Enfin, des moyens de serrage différents des moyens décrits pourraient être utilisés afin d'exercer l'effort longitudinal de serrage à l'intérieur de chacun des couloirs. En particulier, ces moyens de serrage pourraient n'être placés que dans l'une des parties latérales du corps du dispositif. Par ailleurs, les rondelles élastiques 44a, 44b pourraient être remplacées par tous autres dispositifs élastiques équivalents tels que des ressorts de compression.

**Revendications**

1. Dispositif de préhension d'un faisceau de crayons (a) disposés en rangées parallèles de n crayons au plus, selon un réseau à pas carré dans un assemblage de combustible nucléaire, ce dispositif étant caractérisé en ce qu'il comprend :
   - un corps (12) comportant une partie centrale (14) évidée selon un rectangle dont les dimensions sont au moins égales aux dimensions extérieures présentées en section par le faisceau, des cloisons parallèles (24) divisant cette partie centrale en p couloirs (26) pouvant recevoir chacun les extrémités des crayons d'au plus deux rangées de crayons voisines ;
   - p séries de (n+1) organes mobiles (34, 34') logées dans chacun des p couloirs (26) de telle sorte que l'extrémité de chaque crayon peut être placée entre deux organes mobiles voisins d'un même couloir ;
   - des moyens de serrage et des moyens d'actionnement (36a, 36b, 48a, 48b, 54a, 54b) logés dans le corps (12) d'un côté au moins de ladite partie centrale (14), aptes à appliquer sur les extrémités des crayons (a) et les organes mobiles (34, 34') contenus dans chacun des couloirs (26) un effort tendant à serrer chaque crayon entre deux organes mobiles voisins d'un même couloir.

2. Dispositif selon la revendication 1, adapté à la préhension d'un faisceau de crayons comprenant moins de n crayons dans certaines desdites rangées, déterminant ainsi des vides dans ledit réseau à pas carré, ce dispositif étant caractérisé en ce qu'il comprend de plus des rouleaux (78) de diamètre extérieur sensiblement égal à celui des crayons, ces rouleaux étant placés entre certains des organes mobiles (34) afin de combler les vides du réseau.

3. Dispositif selon l'une quelconque des revendications 1 et 2, caractérisé en ce que, chacun des couloirs (26) pouvant recevoir les extrémités des crayons (a) de deux rangées de crayons voisines, les organes mobiles (34, 34') ont la forme de croisillons et comprennent une branche (76, 76') placée entre les deux rangées de crayons voisines d'un même couloir et dont une extrémité peut venir en appui sur une extrémité de ladite branche (76, 76') de l'organe mobile voisin, afin de limiter l'effort appliqué sur les crayons, lors de la mise en œuvre des moyens de serrage.

4. Dispositif selon l'une quelconque des revendications 1 à 3, caractérisé en ce qu'il comprend de plus un dispositif éjecteur (66) comportant une plaque (68) mobile par rapport au corps (12) selon une direction orthogonale audit rectangle formé par la partie centrale évidée (14), cette plaque portant un faisceau de tiges (70) disposées selon un réseau identique à celui des crayons (a) et aptes à prendre la place de ces derniers, pour les éjecter du dispositif de préhension (10) après relâchement des moyens de serrage.

5. Dispositif selon la revendication 4, caractérisé en ce qu'il comprend de plus des moyens élastiques (74) sollicitant le dispositif éjecteur (66) vers une position dans laquelle les tiges (70) sont placées entre les organes mobiles (34, 34') à la place des crayons (a).

6. Dispositif selon l'une quelconque des revendications 1 à 5, caractérisé en ce que les moyens de serrage comprennent deux séries de p poussoirs (36a, 36b) logés dans le corps (12), sur deux côtés opposés de ladite partie centrale (14), un poussoir de chaque série pénétrant dans chacun des couloirs (26), aux extrémités opposées de celui-ci, et des moyens d'actionnement (48a, 48b, 54a, 54b) aptes à déplacer les poussoirs (36a, 36b) vers ladite partie centrale (14) pour exercer ledit effort sur les extrémités des crayons (a) et les organes mobiles (34, 34').

7. Dispositif selon la revendication 6, caractérisé en ce que chaque poussoir (36a, 36b) est réalisé en deux parties coulissantes (40a, 40b, 42a, 42b) et comprend un dispositif élastique (44a, 44b) par lequel l'effort exercé par les moyens d'actionnement (48a, 48b, 54a, 54b) est transmis entre lesdites parties.

8. Dispositif selon l'une quelconque des revendications 6 et 7, caractérisé en ce que les moyens d'actionnement comprennent deux dispositifs à coins (48a, 48b, 54a, 54b) agissant sur chaque série de poussoirs (36a, 36b), ces dispositifs à coins pouvant occuper une position stable d'ouverture et une position stable de fermeture.

9. Dispositif selon la revendication 8, caractérisé en ce que chaque dispositif à coin comprend une première pièce (48a, 48b) mobile dans le corps (12) selon une direction de coulissement en rapprochement et en éloignement de la partie centrale (14), cette première pièce étant en appui sur l'une des séries de poussoirs (36a, 36b) et une deuxième pièce (54a, 54b) mobile dans le corps (12) selon une direction orthogonale à la direction de coulissement de la première pièce, ces deux pièces coopérant entre elles par un système de rampes (52a, 52b, 60a, 60b) terminées par des parties planes définissant lesdites positions stables d'ouverture et de fermeture.

**Claims**

1. Apparatus for gripping a group of rods (a) arranged in the form of paralell rows of at the most (n) rods, in accordance with a square grid in a nuclear fuel assembly, characterized in that:
it comprises a body (12) having a central portion (14) recessed in accordance with a rectangle, whose dimensions are at least equal to the external dimensions of the bundle in section, parallel partitions (24) subdividing said central portion into (p) passageways (26), each of which is able to receive the ends of the rods of at the most two rows of adjacent rods; (p) rows of (n+1) mobile members (34, 34′) located in each of the (p) passageways (26), in such a way that the end of each rod can be placed between two adjacent mobile members of the same passageway;
locking means and actuating means (36a, 36b, 48a, 48b, 54a, 54b) located in body (12) on at least one side of said central portion (14), able to apply to the ends of the rods (a) and the mobile members (34, 34′) contained in each of the passageways (26) a force tending to lock each rod between two adjacent mobile members of the same passageway.

2. Apparatus according to claim 1 adapted to the gripping of a bundle of rods with less than (n) rods in certain of said rows, thus defining spaces in said square grid, characterized in that the apparatus comprises rollers (78) having an external diameter substantially equal to that of the rods, said rollers being placed between certain of the mobile members (34) in order to fill the spaces in the grid.

3. Apparatus according to any one of the claims 1 and 2, characterized in that each of the passageways (26) can receive the ends of rods (a) of two rows of adjacent rods, the mobile members (34, 34′) being shaped like crosses and having a branch (76, 76′) placed between two rows of adjacent rods of a same passageway and whereof one end can bear on one end of said branch (76, 76′) of the adjacent mobile member, in order to limit the force applied to the rods during the putting into operation of the locking means.

4. Apparatus according to one of the claims 1 to 3, characterized in that it also comprises an ejector (66) having a plate (68) mobile with respect to body (12) in a direction orthogonal to the rectangle formed by the recessed central portion (14), said plate having a bundle of bars (70) disposed according to a grid identical to that of rods (a) and able to take the place of the latter, in order to eject same from the gripping apparatus (10) following slackening of the locking means.

5. Apparatus according to claim 4, characterized in that it also comprises elastic means (74) moving the ejector (66) towards a position in which the bars (70) are placed between mobile member (34, 34′) in place of rods (a).

6. Apparatus according to one of the claims 1 to 5, characterized in that the locking means comprise two rows of (p) plungers (36a, 36b) located in body (12), on two opposite sides of said central portion (14), one plunger of each row penetrating each of the passageways (26) at the opposite ends thereof and actuating means (48a, 48b, 54a, 54b) able to move the plungers (36a, 36b) towards said central portion (14) to exert said force on the ends of the rods (a) and the mobile members (34, 34′).

7. Apparatus according to claim 6, characterized in that each plunger (36a, 36b) is in two sliding portions (40a, 40b, 42a, 42b) and comprises an elastic device (44a, 44b) by which the force exerted by the actuating means (48a, 48b, 54a, 54b) is transmitted between said portions.

8. Apparatus according to either of the claims 6 and 7, characterized in that the actuating means comprise two wedge devices (48a, 48b, 54a, 54b) acting on each row of plungers (36a, 36b), said wedge devices being able to occupy a stable opening position and a stable closing position.

9. Apparatus according to claim 8, characterized in that each wedge device comprises a first part (48a, 48b), mobile in body (12) a sliding direction moving away from and towards the central portion (14), said first part bearing on one of the rows of plungers (36a, 36b) and a second part (54a, 54b) mobile in body (12) in a direction orthogonal to the sliding direction of the first part, said two parts cooperating with one another by means of a system of ramps (52a, 52b, 60a, 60b) terminated by planar portions defining said stable opening and closing positions.

## Patentansprüche

1. Greifvorrichtung für ein Bündel von Stäben (a), die in parallelen Reihen mit höchstens n Stäben entlang eines Netzwerks mit quadratischer Einteilung in einer Kernbrennstoffanordnung angeordnet sind, wobei die Vorrichtung dadurch gekennzeichnet ist, daß sie aufweist:
– einen Hauptteil (12), der einen hohlen, zentralen Teil (14) entlang eines Rechtecks, dessen Ausmaße wenigstens gleich sind den äußeren Ausmaßen, die durch das Bündel im Querschnitt gegeben sind, und parallele Zwischenwände (24) aufweist, die den zentralen Teil in p Gänge (26) aufteilen, von denen jeder die Enden der Stäbe aus höchstens zwei benachbarten Reihen von Stäben aufnehmen kann;
– p Reihen von (n + 1) beweglichen Teilen (34, 34′), die in jedem der p Gänge (26) so angeordnet sind, daß das Ende jedes Stabs zwischen zwei benachbarte, bewegliche Teile eines selben Gangs angeordnet werden kann;
– eine Festklemm- und eine Betätigungsvorrichtung (36a, 36b, 48a, 48b, 54a, 54b), die in dem Hauptteil (12) wenigstens auf einer Seite des zentralen Teils (14) angeordnet sind und die geeignet sind, auf die Enden der Stäbe (a) und die in jedem der Gänge (26) enthaltenen beweglichen Teile (34, 34′) einen Druck anzuwenden, wobei angestrebt wird, jeden Stab zwischen zwei benachbarte, bewegliche Teile eines selben Gangs zu klemmen.

2. Vorrichtung nach Anspruch 1, die geeignet ist ein Bündel von Stäben zu greifen, das weniger als n Stäbe in bestimmten Reihen enthält, wobei so Leerräume in dem quadratisch eingeteilten Netz bestimmt werden, wobei diese Vorrichtung dadurch gekennzeichnet ist, daß sie außerdem zwei Rollen (78) mit einem äußeren Durchmesser aufweist, der ziemlich dem der Stäbe gleich ist, wobei diese Rollen zwischen bestimmten beweglichen Teilen (34) angeordnet sind, um die Leerräume des Netzwerks aufzufüllen.

3. Vorrichtung nach einem der Ansprüche 1 und 2, dadurch gekennzeichnet, daß die beweglichen Teile (34, 34'), während jeder der Gänge (26) die Enden von Stäben (a) von zwei benachbarten Reihen von Stäben aufnehmen kann, die Form eines Kreuzes haben und einen Zweig (76, 76') aufweisen, der zwischen den beiden benachbarten Reihen von Stäben eines selben Gangs angeordnet ist und dessen eines Ende sich auf ein Ende des Zweiges (76, 76') des beweglichen Teils stützen kann, um den auf die Stäbe angewandten Druck während der Inbetriebnahme der Klemmvorrichtung zu begrenzen.

4. Vorrichtung nach einem der Ansprüche 1 bis 3, dadurch gekennzeichnet, daß sie außerdem eine Auswurfvorrichtung (66) aufweist, die eine Platte (68) aufweist, die bezüglich des Hauptteils (12) entlang einer Richtung senkrecht zu dem durch den geleerten, zentralen Teil (14) gebildeten Rechteck beweglich ist, wobei diese Platte ein Bündel von Stiften (70) trägt, die nach einem Netz, das mit dem der Stäbe (a) identisch ist, angeordnet sind und die geeignet sind, den Platz der letzteren einzunehmen, um sie aus der Greifvorrichtung (10) nach dem Loslassen der Klemmvorrichtung auszuwerfen.

5. Vorrichtung nach Anspruch 4, dadurch gekennzeichnet, daß sie weiterhin eine elastische Vorrichtung (74) aufweist, die die Auswurfvorrichtung (66) in eine Position drängt, in der die Stifte (70) zwischen die beweglichen Teile (34, 34') anstelle der Stäbe (a) angeordnet sind.

6. Vorrichtung nach einem der Ansprüche 1 bis 5, dadurch gekennzeichnet, daß die Klemmvorrichtung zwei Reihen von p Vorschubstangen (36a, 36b), die im Hauptteil (12) auf zwei gegenüberliegenden Seiten des zentralen Teils (14) angeordnet sind, wobei eine Vorschubstange jeder Reihe in jeden der Gänge (26) an den diesen gegenüberliegenden Enden eindringt, und eine Betätigungsvorrichtung (48a, 48b, 54a, 54b) aufweist, die geeignet ist, die Vorschubstangen (36a, 36b) in Richtung des zentralen Teils (14) zu bewegen, um den Druck auf die Enden der Stäbe (a) und die beweglichen Teile (34, 34') auszuüben.

7. Vorrichtung nach Anspruch 6, dadurch gekennzeichnet, daß jede Vorschubstange (36a, 36b) aus zwei gleitenden Teilen (40a, 40b, 42a, 42b) besteht und eine elastische Vorrichtung (44a, 44b) aufweist, durch welche der durch die Betätigungsvorrichtung (48a, 48b, 54a, 54b) ausgeübte Druck zwischen den Teilen übertragen wird.

8. Vorrichtung nach einem der Ansprüche 6 und 7, dadurch gekennzeichnet, daß die Betätigungsvorrichtung zwei Vorrichtungen mit Ecken (48a, 48b, 54a, 54b) aufweist, die auf jede Reihe von Vorschubstangen (36a, 36b) wirken, wobei diese Vorrichtungen mit Ecken eine stabile Öffnungs- und eine stabile Verschlußposition einnehmen können.

9. Vorrichtung nach Anspruch 8, dadurch gekennzeichnet, daß jede Vorrichtung mit Ecke ein erstes Teil (48a, 48b), das in dem Hauptteil (12) entlang einer Gleitrichtung zum Annähern und Entfernen von dem zentralen Teil (14) beweglich ist, wobei dieses erste Teil sich auf die eine der Reihen von Vorschubstangen stützt, und ein zweites Teil (54a, 54b) aufweist, das in dem Hauptteil (12) entlang einer Gleitbewegung des ersten Teils senkrechten Richtung beweglich ist, wobei diese beiden Teile untereinander über ein System von Rampen (52a, 52b, 60a, 60b) zusammenwirken, die von ebenen Teilen begrenzt werden, die die stabilen Öffnungs- und Verschlußpositionen bestimmen.

FIG. 1

FIG. 2A

FIG. 2B

FIG. 3

EP 0 230 172 B1

FIG. 4

EP 0 230 172 B1

FIG. 5

FIG. 6